# FASCICULE DE BREVET EUROPEEN

(11) **EP 2 924 825 B1**
(45) Date de publication et mention de la délivrance du brevet: **14.06.2017**
(21) Numéro de dépôt: 14305457.5
(22) Date de dépôt: 28.03.2014
(51) Int. Cl.: H02G 3/00, G01V 1/00, H02G 3/12

(54) **Produit, avec dispositif de localisation sonore, pour installation électrique incluant un réseau et au moins un équipement et ladite installation incluant en outre au moins un tel produit**
Produkt mit akustischer Lokalisierungsvorrichtung für elektrische Anlage, die ein Netz und mindestens eine Geräteausstattung umfasst, und entsprechende Anlage, die zusätzlich mindestens ein solches Produkt umfasst
Product, with sound-locating device, for electrical installation including a network and at least one system, said installation further including at least one such product

(43) Date de publication de la demande: 30.09.2015
(73) Titulaire: HAGER CONTROLS (Société par Actions Simplifiée), 67700 Saverne (FR)
(72) Inventeur: Lugbull, Pierre-Alain Xavier, 67700 Otterswiller (FR); Colinmaire, Thierry, 57370 Saint Jean Kourtzerode (FR)
(74) Mandataire: Nuss, Laurent

(56) Documents cités:
- DE-C1- 19 801 228
- FR-A1- 2 464 584
- FR-A1- 2 758 398
- US-A1- 2006 000 100
- US-A1- 2012 298 815

## Description

La présente invention concerne le domaine des équipements pour installation électrique incluant un réseau de communication filaire, notamment du type comprenant un bus KNX, ou hertzien et au moins un équipement relié audit réseau, plus particulièrement dans le domaine de la domotique, et a pour objet un produit, avec dispositif de localisation sonore, pour une installation électrique incluant un réseau de communication et au moins un équipement relié audit réseau. Elle a également pour objet une telle installation incluant en outre au moins un tel produit.

Dans le monde de la domotique, on connaît des produits qui permettent de gérer à distance des équipements tels que des équipements acteurs comme, par exemple, des appareils d'éclairage, des appareils de chauffage, des volets, des stores, des prises de courant, ou des équipements capteurs ou donneurs d'ordre comme, par exemple, des détecteurs, des interrupteurs ou des boutons poussoirs. Ces équipements sont reliés par à un réseau de communication filaire ou hertzien. Un réseau filaire comprend généralement un bus KNX, ou autre protocole ou standard de communication ou de transmission d'information, alimenté avec une tension continue.

Ce type de produit concerne aussi bien un produit d'entrée prévu pour recevoir un ordre extérieur par l'utilisateur et pour envoyer cet ordre sur le réseau, par exemple le bus KNX, qu'un produit de sortie prévu pour recevoir un message via le réseau pour commander un produit extérieur.

De tels produits se présentent sous la forme d'un boîtier fermé par des parois délimitant son espace interne de réception et renfermant dans ledit espace une carte électronique de commande permettant de commander ou d'activer l'équipement concerné, relié à ladite carte, par exemple en activant la source de puissance pour le fonctionnement d'un appareil de chauffage, un appareil d'éclairage, un volet roulant ou un store, ou par exemple en activant un commutateur dans un équipement tel qu'un interrupteur, un bouton poussoir ou une prise de courant.

La carte électronique de ce type de produit, qui est reliée à l'équipement concerné, est également reliée au réseau de communication. Dans le domaine de la domotique, un tel réseau, filaire ou hertzien, est généralement relié à un système domotique prévu pour piloter l'ensemble des équipements.

Ces produits sont installés dans un bâtiment en étant localisés soit derrière une paroi de séparation, soit directement, ou via une boîte d'encastrement contenant ledit produit, dans une ouverture d'encastrement pratiquée dans une paroi de séparation et étant fermée par un élément de fermeture et/ou d'équipement, tel que par exemple un couvercle de fermeture ou un interrupteur ou bouton poussoir, fermant ladite ouverture, soit dans un équipement encastré ou semi encastré dans ladite ouverture en fermant cette dernière, soit encore dans une boîte, tel qu'une boîte de dérivation, ou une goulotte, disposée en un endroit quelconque.

On entendra, dans la présente demande, par paroi de séparation toute paroi de séparation que l'on peut trouver dans un bâtiment ou un habitat telle que par exemple une paroi murale, une cloison, une toile tendue, ou encore une paroi de faux plafond.

D'autre part, on entendra dans la présente demande par le terme relié une liaison ou une connexion fonctionnelle, électrique ou radio.

En outre de tels produits sont généralement montés dans une boîte d'encastrement elle-même disposée derrière la paroi ou encastré dans l'ouverture d'encastrement, voire fixée sur la face arrière de l'équipement. Du document US 2012/0298815 il est connu un dispositif pour localiser des telles boîtes d'encastrement disposées derrière des parois. Toutefois, du fait de leur localisation précitée, ces produits ne sont pas visibles par l'installateur une fois installés et il devient alors difficile pour la personne intervenant sur l'installation, telle qu'un électricien, de trouver le produit sur lequel il doit intervenir, surtout lorsqu'il y a plusieurs produits dans une même pièce et à des endroits différents.

La présente invention a pour but de pallier ces inconvénients en proposant un produit, avec dispositif de localisation sonore, pour installation électrique incluant un réseau de communication filaire ou hertzien permettant de localiser le produit même si celui-ci est non visible.

A cet effet, la présente invention a pour objet un produit, avec dispositif de localisation sonore, pour installation électrique incluant un réseau de communication filaire ou hertzien et au moins un équipement relié à ce dernier, ledit produit comprenant un boîtier présentant des parois délimitant son espace interne de réception qui reçoit au moins une carte électronique prévue pour être reliée audit réseau et au ou à au moins l'un desdits équipements, se caractérisant essentiellement en ce que le dispositif de localisation sonore comprend au moins un élément transducteur capable d'émettre un signal sonore audible quand on lui applique une tension électrique, ledit élément étant situé et maintenu fixement dans ledit espace en étant relié, pour sa commande en tension, à la carte électronique ou directement audit réseau.

La présente invention a également pour objet une installation électrique incluant un réseau de communication filaire ou hertzien et au moins un équipement relié à ce dernier, ladite installation comprenant au moins un produit comprenant un boîtier comportant des parois délimitant son espace interne de réception qui reçoit au moins une carte électronique reliée audit réseau et au ou à au moins l'un des équipements, ledit produit étant non visible, c'est-à-dire situé, par exemple, soit derrière une paroi de séparation, soit, directement, ou via une boîte d'encastrement contenant ledit produit, dans une ouverture d'encastrement pratiquée dans une paroi de séparation et fermée par un élément de fermeture et/ou d'équipement, soit dans un équipement encastré ou semi encastré dans ladite ouverture en fermant cette dernière, se caractérisant essentiellement en ce que le ou chaque produit consiste en un produit défini selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective du produit selon la présente invention logé dans une boîte d'encastrement localisée derrière une paroi de séparation,
- la figure 2 montre une vue en perspective du produit selon la présente invention logé dans boîte d'encastrement destinée à être encastrée dans une ouverture d'encastrement pratiquée dans une paroi de séparation et fermée par un équipement du type interrupteur,

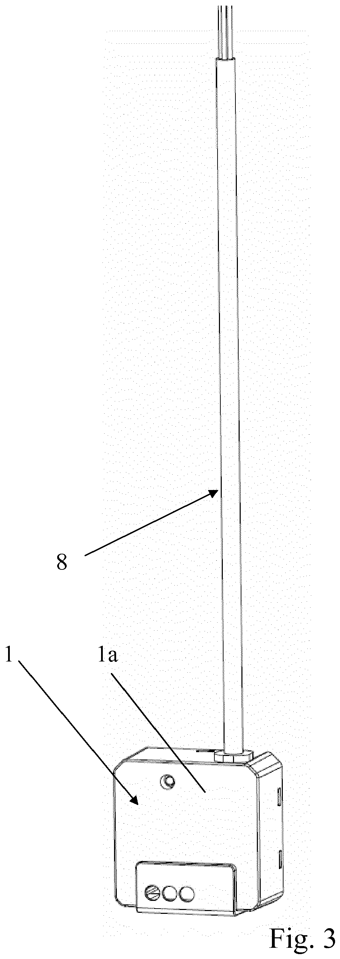

- la figure 3 montre une vue en perspective du produit représenté sur la figure 1 ou sur la figure 2,
- la figure 4 montre une vue en perspective du produit représenté sur la figure 3 à l'état ouvert du boîtier faisant apparaître le dispositif de localisation selon l'invention dans son espace interne,
- la figure 5 montre une vue en perspective du produit selon l'invention localisé dans un équipement du type interrupteur destiné à être encastré ou semi encastré, via une boîte d'encastrement, dans une ouverture d'encastrement pratiquée dans une paroi de séparation.

Les figures montrent un produit, avec dispositif de localisation sonore, pour installation électrique incluant un réseau de communication filaire ou hertzien et au moins un équipement 6, 7 relié audit réseau, ledit produit comprenant un boîtier 1 présentant des parois la délimitant son espace interne 1b de réception qui reçoit au moins une carte électronique 2 prévue pour être reliée audit réseau et à l'équipement 6, 7 ou au moins l'un des équipements 6, 7.

Conformément à la présente invention, le dispositif de localisation sonore comprend au moins un élément 3 transducteur capable d'émettre un signal sonore audible quand on lui applique une tension électrique. En outre, l'élément 3 est situé et maintenu fixement dans l'espace interne du boîtier en étant relié, pour sa commande en tension, à la carte électronique 2 ou directement audit réseau.

On entendra par élément 3 relié directement audit réseau, une connexion de l'élément 3 au réseau sans passer par la carte électronique 2, par exemple en étant relié directement à une borne de connexion électrique ou radio fréquence fixée dans le boîtier 1 et permettant sa connexion au réseau.

De préférence, le réseau de communication filaire peut être du type comprenant un bus KNX.

Dans une forme de réalisation préférentielle de l'élément 3 transducteur, celui-ci peut consister en un élément transducteur piézo-électrique du type consistant en un buzzer, connu également sous le nom de bipper, piézo-électrique incluant une cellule piézo-électrique, c'est-à-dire une membrane ou pastille piézo-électrique, ou du type consistant essentiellement en une telle cellule piézo-électrique.

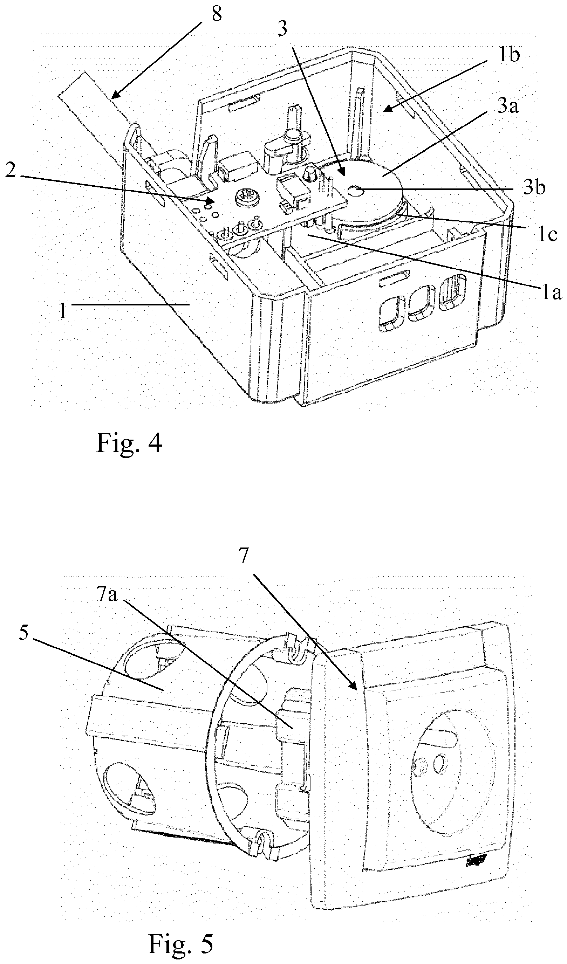

De préférence, l'élément 3 peut être maintenu fixement dans le boîtier 2 en étant appliqué directement contre la face interne, dite face interne d'application, de l'une des parois 1a du boîtier 1. Une telle application de l'élément 3 directement contre l'une des parois 1a du boitier 1 permet d'augmenter davantage la résonnance de l'élément 3 et une meilleure propagation du son émis vers l'extérieur du boîtier 1 (figure 4).

Dans le cas, non représenté, où l'élément 3 consiste en la cellule piézo-électrique, ladite cellule peut être directement appliquée contre la face interne d'application.

Dans le cas, comme on peut le voir également sur la figure 4, où l'élément 3 consiste en le buzzer piézo-électrique incluant la cellule piézo-électrique, celui-ci peut comprendre une boîte 3a de protection, de préférence cylindrique ou parallélépipédique rectangle, et la cellule 3b piézo-électrique pour l'émission du signal sonore audible. La cellule 3b piézo-électrique peut ainsi être encapsulée pour sa protection dans la boîte 3a de protection qui peut être réalisée à partir d'une matière plastique standard.

En outre, la boîte 3a de protection peut être maintenue fixement dans l'espace interne 1b du boîtier 1 pour le maintien de l'élément 3 dans ce dernier.

D'autre part, dans le cas où la présente invention prévoit, préférentiellement, que l'élément 3 est appliqué directement contre la face interne d'application, la boîte 3a peut être appliquée directement par l'une de ses faces externes, dite face externe d'application, contre la face interne d'application. De préférence l'extension surfacique de la face externe d'application peut être supérieure à celle de la cellule 3b piézo-électrique, ce afin de créer un effet d'amplification du signal sonore émis se propageant depuis la cellule 3b, via la face externe d'application, jusque dans la paroi 1a de la face interne d'application puis à l'extérieur du boîtier 1.

De préférence, l'élément 3, c'est-à-dire, de préférence, la cellule 3b ou, le cas échéant, la boîte 3a du buzzer, peut être maintenu(e) fixement dans l'espace interne 1b du boîtier 1 par collage, au moyen d'une colle ou d'un adhésif double face, entre sa face externe d'application et la face interne d'application de la paroi 1a correspondante du boîtier 1, ou encore, notamment dans le cas du buzzer, par clipsage ou rivetage, c'est-à-dire notamment de la boîte, ou tout autre moyen de fixation permettant de plaquer l'élément 3 transducteur piézo-électrique contre l'une des parois 1a du boîtier 1 délimitant son espace interne pour augmenter davantage la résonnance dudit élément 3.

D'autre part, pour renforcer davantage la protection de l'élément 3 et/ou délimiter l'emplacement de fixation de ce dernier dans le boîtier, le boîtier 1 peut comporter en outre au moins une nervure 1c fixée sur la face interne d'application de sorte à entourer de façon continue ou interrompue l'emplacement prévu pour recevoir l'élément 3 (figure 4).

On comprendra que l'élément 3 transducteur piézo-électrique peut fonctionner avec une cellule 3b, c'est-à-dire une simple membrane ou pastille, de préférence en contact directement avec l'une des parois 1a délimitant l'espace interne du boîtier 1 ou avec une telle cellule 3b encapsulée dans une boîte 3a de protection (buzzer) permettant de sécuriser davantage la cellule 3b notamment dans le cas où le buzzer se détacherait de son support dans le boîtier 1.

Dans une autre forme de réalisation de l'élément 3 transducteur, non représentée sur les figures annexées, celui-ci peut consister en un élément transducteur électro-mécanique ou électromagnétique du type, communément appelé, buzzer, ou biper, électro-mécanique ou électromagnétique. Un tel buzzer électro-mécanique ou électromagnétique peut être maintenu dans le boîtier, à l'instar du buzzer piézo-électrique, contre une paroi 1a du boîtier 1 ou à distance de ladite paroi sur tout autre partie de support dans le boîtier, ce par des moyens de fixation tels que des moyens de collage, clipsage ou rivetage.

De préférence, la carte électronique 2 peut adaptée pour piloter l'élément 3 à distance, c'est-à-dire pour régler à distance les caractéristiques de puissance ou de fréquence ou tout autre caractéristique pertinente liée à l'élément 3, afin de faciliter la localisation et/ou l'identification du produit, ce à partir d'un signal d'information externe provenant du réseau et reçu par ladite carte électronique 2.

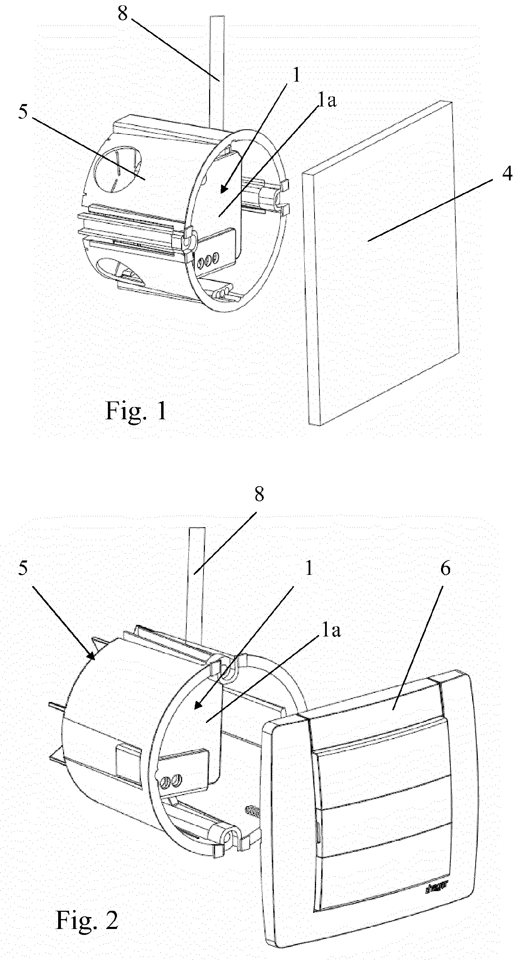

La présente invention a également pour objet une installation électrique incluant un réseau de communication filaire ou hertzien, au moins un équipement relié audit réseau et au moins un produit comprenant un boîtier 1 comportant des parois 1a délimitant son espace interne 1b de réception qui reçoit au moins une carte électronique 2 connectée par voie filaire ou hertzienne audit réseau, ledit produit étant non visible, c'est-à-dire situé ou localisé, par exemple soit derrière une paroi de séparation 4 (figure 1), soit directement, ou via une boîte d'encastrement et/ou de dérivation 5 contenant ledit produit, dans une ouverture d'encastrement pratiquée dans une paroi de séparation 4 et fermée par un élément de fermeture et/ou d'équipement (voir notamment la figure 2 mais qui ne montre pas la paroi de séparation 4), tel que par exemple un couvercle de fermeture ou un interrupteur 6 ou bouton poussoir, soit dans un équipement, tel que par exemple une prise de courant 7, plus particulièrement dans un logement fermé 7a dudit équipement s'étendant derrière sa face frontale visible de l'extérieur (figure 2), encastré dans ladite ouverture et fermant cette dernière, soit encore dans une boîte, tel qu'une boîte de dérivation, ou une goulotte, disposée en un endroit quelconque.

On notera qu'une boîte de dérivation, dans le domaine des installations électrique, est connue pour être similaire à une boîte d'encastrement utilisée également dans ce domaine mais de taille plus importante pour permettre le câblage de plusieurs produits, et donc de produits selon l'invention, dans la même boîte.

Conformément à la présente invention, dans une telle installation le ou chaque produit consiste en un produit défini selon la présente invention.

Dans une telle installation, le réseau de communication peut être un réseau filaire et peut comprendre un bus de communication 8, tel qu'un bus KNX ou autre protocole ou standard de communication ou de transmission d'information.

Ainsi, le dispositif de localisation sonore qui équipe un produit selon la présente invention permet de localiser le produit dans une pièce d'un bâtiment grâce au son audible qu'il émet. La commande ou le pilotage de l'élément 3 transducteur capable d'émettre un signal sonore audible peut être activé ou piloté dans une installation selon la présente invention en recevant une commande d'activation, soit via le réseau, par exemple dans le cas d'un réseau filaire, via le bus de communication KNX, et via la carte électronique 2, soit, le cas échéant, directement dudit réseau.

Le produit selon la présente invention peut être tout type de produit permettant de gérer à distance des équipements tels que des équipements acteurs comme, par exemple, des appareils d'éclairage, des appareils de chauffage, des volets, des stores, des prises de courant 7, ou des équipements capteurs ou donneurs d'ordre comme, par exemple, des détecteurs, des interrupteurs 6 ou des boutons poussoirs. Ces équipements peuvent être reliés par le réseau de communication filaire ou hertzien. Le produit selon l'invention peut être prévu pour commander ou activer l'équipement concerné, relié fonctionnellement à la carte électronique 2, par exemple en activant la source de puissance pour le fonctionnement d'un appareil de chauffage, d'un appareil d'éclairage, d'un volet roulant ou d'un store, ou par exemple en activant un commutateur, non visible sur les figures annexées, dans un équipement tel qu'un interrupteur 6, un bouton poussoir ou une prise de courant 7.

D'autre part, le produit selon l'invention peut concerner aussi bien un produit d'entrée prévu pour recevoir un ordre extérieur par l'utilisateur et pour envoyer cet ordre sur le réseau, par exemple le bus KNX, qu'un produit de sortie prévu pour recevoir un message via le réseau pour commander un produit extérieur.

Par ailleurs, grâce à la connexion de l'élément 3 au réseau, directement ou via la carte électronique 2, notamment dans le cas d'un réseau filaire du type KNX, il est possible de faire sonner ou biper le produit voulu ou recherché ou une pluralité de tels produits selon l'invention.

Bien entendu, invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Produit pour installation électrique, ledit produit comprenant un boîtier (1) présentant des parois (1a) délimitant son espace interne (1b) de réception, **caractérisé**
**en ce que** l'installation électrique inclue un réseau de communication filaire (8) ou hertzien et au moins un équipement (6, 7) relié à ce dernier,
**en ce que** l'espace interne (1b) de reception reçoit au moins une carte électronique (2) prévue pour être reliée audit réseau et au ou à au moins l'un desdits équipements et
**en ce que** le produit comprend en outre un dispositif de localisation sonore comprenant au moins un élément (3) transducteur capable d'émettre un signal sonore audible quand on lui applique une tension électrique, ledit élément (3) étant situé et maintenu fixement dans ledit espace en étant relié, pour sa commande en tension, à la carte électronique (2) ou directement audit réseau.

2. Produit, selon la revendication 1, **caractérisé en ce que** l'élément (3) transducteur consiste en un élément transducteur piézo-électrique du type buzzer piézo-électrique incluant une cellule (3b) piézo-électrique, c'est-à-dire une membrane ou pastille piezzo-électrique, ou du type consistant en une telle cellule (3b) piezzo-électrique.

3. Produit, selon la revendication 2, **caractérisé en ce que** l'élément (3) est maintenu fixement dans le boîtier (2) en étant appliqué directement contre la face interne, dite face interne d'application, de l'une des parois (1a) du boîtier (1).

4. Produit, selon la revendication 3, **caractérisé en ce que** le boîtier (1) comporte en outre au moins une nervure (1c) fixée sur la face interne d'application de sorte à entourer de façon continue ou interrompue un emplacement prévu pour recevoir l'élément (3).

5. Produit, selon la revendication 3 ou la revendication 4, **caractérisé en ce que** l'élément (3) consiste en la cellule (3b) piézo-électrique et **en ce que** ladite cellule (3b) est directement appliquée contre la face interne d'application.

6. Produit, selon la revendication 3 ou la revendication 4, **caractérisé en ce que** l'élément (3) consiste en le buzzer piézo-électrique incluant la cellule piézo-électrique et **en ce que** ledit élément comprend une boîte (3a) de protection, de préférence cylindrique ou parallélépipédique rectangle, et la cellule (3b) piézo-électrique pour l'émission du signal sonore audible, ladite cellule étant encapsulée pour sa protection dans ladite boîte et **en ce que** ladite boîte est maintenue fixement dans l'espace interne (1b) du boîtier (1) et est appliquée directement par l'une de ses faces externes, dite face externe d'application, contre la face interne d'application.

7. Produit, selon la revendication 6, **caractérisé en ce que** l'extension surfacique de la face externe d'application est supérieure à celle de la cellule (3b) piézo-électrique, ce afin de créer un effet d'amplification du signal sonore émis se propageant depuis la cellule (3b), via ladite face externe d'application, jusque dans la paroi (1a) comportant la face interne d'application puis à l'extérieur du boîtier (1).

8. Produit, selon l'une quelconque des revendications 3 à 7, **caractérisé en ce que** l'élément (3), c'est-à-dire la cellule (3b) ou, le cas échéant, la boîte (3a) du buzzer, est maintenu(e) fixement par collage, au moyen d'une colle ou d'un adhésif double face, entre sa face externe d'application et la face interne d'application, ou encore, par clipsage ou rivetage, ou tout autre moyen de fixation permettant de plaquer l'élément (3) contre l'une des parois (1a) du boîtier (1) délimitant son espace interne pour augmenter davantage la résonnance de l'élément (3).

9. Produit, selon la revendication 1, **caractérisé en ce que** l'élément (3) transducteur consiste en un élément transducteur électromagnétique du type buzzer électro-mécanique

10. Produit, selon l'une quelconque des revendications 1 à 9, **caractérisé en ce que** la carte électronique (2) est adaptée pour piloter l'élément (3) à distance, c'est-à-dire pour régler à distance les caractéristiques de puissance ou de fréquence ou tout autre caractéristique pertinente liée au profil de l'élément (3), afin de faciliter la localisation et/ou l'identification du produit, ce à partir d'un signal d'information externe provenant du réseau (8) et reçu par ladite carte électronique 2.

11. Installation électrique incluant un réseau de communication filaire (8) ou hertzien, au moins un équipement (6, 7) relié audit réseau et au moins un produit comprenant un boîtier (1) comportant des parois (1a) délimitant son espace interne (1b) de réception qui reçoit au moins une carte électronique (2) reliée audit réseau et au ou à au moins l'un desdits équipements, ledit produit étant non visible, c'est-à-dire, par exemple, situé soit derrière une paroi de séparation (4), soit directement, ou via une boîte d'encastrement et/ou de dérivation (5) contenant ledit produit, dans une ouverture d'encastrement pratiquée dans une paroi de séparation (4) et fermée par un élément de fermeture et/ou d'équipement (6), soit dans un équipement (7) encastré ou semi encastré dans ladite ouverture en fermant cette dernière, soit dans une boîte, tel qu'une boîte de dérivation, ou une goulotte, disposée en un endroit quelconque.
installation **caractérisée en ce que** le ou chaque produit consiste en un produit défini selon l'une quelconque des revendications 1 à 10.

12. Installation, selon la revendication 11, **caractérisée en ce que** le réseau est un réseau filaire et **en ce que** le réseau comprend un bus (8) de communication du type bus KNX.

## Patentansprüche

1. Produkt für elektrische Anlage, wobei das Produkt ein Gehäuse (1) umfasst, das Wände (1a) aufweist, die seinen inneren Aufnahmeraum (1b) begrenzen, **dadurch gekennzeichnet, dass**
die elektrische Anlage ein drahtgebundenes oder drahtloses Kommunikationsnetz (8) sowie mindestens ein mit diesem verbundenes Gerät (6, 7) beinhaltet,
dass der innere Aufnahmeraum (1b) mindestens eine Leiterplatte (2) aufnimmt, die dazu ausgelegt ist, mit dem Netz und dem Gerät bzw. mindestens einem der Geräte verbunden zu werden, und
dass das Produkt ferner eine akustische Ortungsvorrichtung umfasst, die mindestens ein Wandlerelement (3) umfasst, das ein hörbares akustisches Signal aussenden kann, wenn eine elektrische Spannung angelegt ist, wobei das Element (3) in dem Aufnahmeraum angeordnet und fest gehalten wird und für seine Spannungssteuerung mit der Leiterplatte (2) oder direkt mit dem Netz verbunden ist.

2. Produkt nach Anspruch 1,
**dadurch gekennzeichnet, dass**
das Wandlerelement (3) aus einem piezoelektrischen Wandlerelement vom Typ piezoelektrischer Umwandler besteht, das eine piezoelektrische Zelle (3b) einschließt, d.h. eine piezoelektrische Membran oder ein piezoelektrisches Plättchen, oder von einem Typ, der aus einer solchen piezoelektrischen Zelle (3b) besteht.

3. Produkt nach Anspruch 2,
**dadurch gekennzeichnet, dass**
das Element (3) fest in dem Gehäuse (2) gehalten wird, wobei es direkt an der Innenseite, der so genannten Innenseite zum Anbringen, einer der Wände (1a) des Gehäuses (1) angebracht wird.

4. Produkt nach Anspruch 3,
**dadurch gekennzeichnet, dass**
das Gehäuse (1) ferner mindestens einen Steg (1c) aufweist, der auf der Innenseite zum Anbringen so befestigt ist, dass er kontinuierlich oder unterbrochen eine Stelle umgibt, die zur Aufnahme des Elements (3) vorgesehen ist.

5. Produkt nach Anspruch 3 oder Anspruch 4,
**dadurch gekennzeichnet, dass**
das Element (3) aus der piezoelektrischen Zelle (3b) besteht und dass die Zelle (3b) direkt an der Innenseite zum Anbringen angebracht ist.

6. Produkt nach Anspruch 3 oder Anspruch 4,
**dadurch gekennzeichnet, dass**
das Element (3) aus dem piezoelektrischen Umwandler besteht, der die piezoelektrische Zelle einschließt, und dass das Element eine vorzugsweise zylindrische oder quaderförmig rechteckige Schutzdose (3a) und die piezoelektrische Zelle (3b) zum Senden des hörbaren akustischen Signals umfasst, wobei die Zelle zu ihrem Schutz in der Dose eingekapselt ist, und dass die Dose fest in dem Innenraum (1b) des Gehäuses (1) gehalten wird und direkt mit einer seiner Außenseiten, der so genannten Außenseite zum Anbringen, an der Innenseite zum Anbringen angebracht wird.

7. Produkt nach Anspruch 6,
**dadurch gekennzeichnet, dass**
die Flächenausdehnung der Außenseite zum Anbringen die der piezoelektrischen Zelle (3b) überschreitet, um einen Verstärkungseffekt des gesendeten akustischen Signals zu erzeugen, das sich von der Zelle (3b) über die Außenseite zum Anbringen bis zu der die Innenseite zum Anbringen aufweisenden Wand (1a) und dann aus dem Gehäuse (1) heraus ausbreitet.

8. Produkt nach einem der Ansprüche 3 bis 7,
**dadurch gekennzeichnet, dass**
das Element (3), d.h. die Zelle (3b) oder gegebenenfalls das Gehäuse (3a) des Umwandlers, fest durch Verkleben mittels eines Klebstoffs oder eines doppelseitigen Klebebandes zwischen seiner Außenseite zum Anbringen und der Innenseite zum Anbringen gehalten wird, oder auch durch Einrasten oder Nieten oder jedes andere Befestigungsmittel, das es ermöglicht, das Element (3) gegen eine der Wände (1a) des Gehäuses (1) zu drücken, so dass dessen Innenraum begrenzt wird, um die Resonanz des Elements (3) noch mehr zu erhöhen.

9. Produkt nach Anspruch 1,
**dadurch gekennzeichnet, dass**
das Wandlerelement (3) aus einem elektromagnetischen Wandlerelement vom Typ elektromagnetischer Umwandler besteht.

10. Produkt nach einem der Ansprüche 1 bis 9,
**dadurch gekennzeichnet, dass**
die Leiterplatte (2) dazu ausgelegt ist, das Element (3) fernzusteuern, d.h. die Leistungs- oder Frequenzmerkmale oder andere mit dem Profil des Elementes (3) verbundene relevante Merkmale fernzusteuern, um die Ortung und/oder die Identifikation des Produktes zu erleichtern, und zwar auf der Grundlage eines externen Informationssignals, das aus dem Netz (8) stammt und durch die Leiterplatte 2 empfangen wird.

11. Elektrische Anlage, die ein drahtgebundenes oder drahtloses Kommunikationsnetz (8), mindestens ein mit diesem Netz verbundenes Gerät (6, 7) und mindestens ein Produkt beinhaltet, letzteres umfassend ein Gehäuse (1), das Wände (1a) aufweist, die seinen inneren Aufnahmeraum (1b) begrenzen, der mindestens eine Leiterplatte (2) aufnimmt, die mit dem Netz und dem Gerät bzw. mindestens einem der Geräte verbunden ist, wobei das Produkt nicht sichtbar ist, d.h. es befindet sich beispielsweise entweder hinter einer Trennwand (4) oder direkt oder über eine Einbaudose und/oder eine Abzweigdose (5), in denen/der das Produkt enthalten ist, in einer Einbauöffnung, die in einer Trennwand (4) ausgebildet ist und durch ein Verschlusselement und/oder ein Element des Geräts (6) geschlossen wird, oder in einem Gerät (7), das in die Öffnung eingelassen oder teilweise eingelassen ist und diese verschließt, oder in einer Dose, wie einer Abzweigdose, oder einem an irgendeiner Stelle vorgesehenen Kanal,
wobei die Anlage **dadurch gekennzeichnet ist, dass**
es sich bei dem Produkt oder allen Produkten um ein Produkt nach einem der Ansprüche 1 bis 10 handelt.

12. Anlage nach Anspruch 11,
**dadurch gekennzeichnet, dass**
das Netz ein drahtgebundenes Netz ist und dass das Netz einen Kommunikationsbus (8) vom Typ KNX-Bus umfasst.

## Claims

1. Product for an electrical installation, said product comprising a housing (1) having walls (1a) defining its inner reception space (1b), **characterized**
**in that** the electrical installation includes a wired or wireless communication network (8) and at least one item of equipment (6, 7) connected to the latter,
**in that** the inner reception space (1b) receives at least one electronic card (2) intended to be connected to said network and to said or to at least one of said item(s) of equipment, and
**in that** the product furthermore comprises an acoustic locating device comprising at least one transducer element (3) capable of emitting an audible acoustic signal when an electric voltage is applied thereto, said element (3) being situated and held fixedly in said space while being connected, for its voltage control, to the electronic card (2) or directly to said network.

2. Product according to Claim 1, **characterized in that** the transducer element (3) consists of a piezoelectric transducer element of the piezoelectric buzzer type including a piezoelectric cell (3b), that is to say a piezoelectric diaphragm or chip, or of the type consisting of such a piezoelectric cell (3b).

3. Product according to Claim 2, **characterized in that** the element (3) is held fixedly in the housing (2) by being applied directly against the inner face, termed the inner application face, of one of the walls (1a) of the housing (1).

4. Product according to Claim 3, **characterized in that** the housing (1) furthermore includes at least one rib (1c) fastened on the inner application face so as to surround, in a continuous or interrupted manner, a location intended to receive the element (3).

5. Product according to Claim 3 or Claim 4, **characterized in that** the element (3) consists of the piezoelectric cell (3b) and **in that** said cell (3b) is applied directly against the inner application face.

6. Product according to Claim 3 or Claim 4, **characterized in that** the element (3) consists of the piezoelectric buzzer including the piezoelectric cell, and **in that** said element comprises a preferably cylindrical or cuboidal protective box (3a) and the piezoelectric cell (3b) for emitting the audible acoustic signal, said cell being encapsulated, for protection thereof, in said box, and **in that** said box is held fixedly in the inner space (1b) of the housing (1) and is applied directly by one of its outer faces, termed the outer application face, against the inner application face.

7. Product according to Claim 6, **characterized in that** the area over which the outer application face extends is larger than that of the piezoelectric cell (3b) in order to create an effect of amplification of the emitted acoustic signal propagating from the cell (3b), via said outer application face, as far as into the wall (1a) including the inner application face and then to outside the housing (1).

8. Product according to any one of Claims 3 to 7, **characterized in that** the element (3), that is to say the cell (3b) or, if appropriate, the box (3a) of the buzzer, is held fixedly by adhesive bonding, by means of a glue or of a double-sided adhesive between its outer application face and the inner application face, or else by snap-fastening or riveting, or by any other fastening means making it possible to hold the element (3) against one of the walls (1a) of the housing (1) defining its inner space in order to further increase the resonance of the element (3).

9. Product according to Claim 1, **characterized in that** the transducer element (3) consists of an electromagnetic transducer element of the electromechanical buzzer type.

10. Product according to any one of Claims 1 to 9, **characterized in that** the electronic card (2) is designed to control the element (3) remotely, that is to say to regulate the power or frequency characteristics or any other relevant characteristic linked to the profile of the element (3) remotely, in order to facilitate the location and/or identification of the product on the basis of an external information signal originating from the network (8) and received by said electronic card (2).

11. Electrical installation including a wired or wireless communication network (8), at least one item of equipment (6, 7) connected to said network, and at least one product comprising a housing (1) having walls (1a) defining its inner reception space (1b) that receives at least one electronic card (2) connected to said network and to said or to at least one of said item(s) of equipment, said product not being visible, that is to say it is for example situated either behind a partition wall (4), or directly, or via a mounting and/or junction box (5) containing said product, in a mounting aperture formed in a partition wall (4) and closed by a closure element and/or item of equipment (6), or in an item of equipment (7) recessed or semi-recessed into said aperture while closing the latter, or in a box, such as a junction box, or a conduit, positioned in any location,
the installation being **characterized in that** the or each product consists of a product defined according to any one of Claims 1 to 10.

12. Installation according to Claim 11, **characterized in that** the network is a wired network and **in that** the network comprises a communication bus (8) of the KNX bus type.
